# EUROPÄISCHE PATENTSCHRIFT

(11) **EP 2 679 415 B1**
(45) Veröffentlichungstag und Bekanntmachung des Hinweises auf die Patenterteilung: **31.01.2018**
(21) Anmeldenummer: 13002742.8
(22) Anmeldetag: 28.05.2013
(51) Int. Cl.: B60G 7/00

(54) **Lenker einer Radaufhängung**
suspension arm
bras de suspension

(30) Priorität: 29.06.2012 DE 102012012994
(43) Veröffentlichungstag der Anmeldung: 01.01.2014
(73) Patentinhaber: AUDI AG, 85045 Ingolstadt (DE)
(72) Erfinder: Hudler, Roland, DE - 85077 Manching (DE)

(56) Entgegenhaltungen:
- WO-A1-92/07672
- WO-A1-2006/046876
- WO-A1-2010/105340
- DE-A1-102008 013 182
- DE-A1-102009 041 478
- DE-A1-102010 051 884
- DE-U1-202009 014 438
- JP-A- H09 220 621
- US-A- 3 797 852
- US-A1- 2009 072 506

## Beschreibung

Die Erfindung betrifft ein Verfahren zur Herstellung eines Lenkers einer Radaufhängung gemäß dem Oberbegriff des Patentanspruches 1.

Im Stand der Technik sind Lenker einer Radaufhängung bekannt, die aus Aluminium im Strangpressverfahren hergestellt werden. Diese Lenker dienen unter anderem dazu, das Rad mit dem Hilfsrahmen zu verbinden. Die Ankopplung des Lenkers an den Hilfsrahmen erfolgt über ein Lager, meist ein Gummi-Metalllager, welches in eine Lageraufnahme des Lenkers eingesetzt wird. Die Lageraufnahme ist im Wesentlichen so gestaltet, dass diese ausgehend vom Lenkerkörper in ein scheibenartiges Trägerprofil übergeht, in welches eine Ausnehmung eingebracht ist, in die wiederum das Lager zur Aufhängung am Hilfsrahmen eingebracht werden kann.

Um die Lagerkräfte aufnehmen zu können, ist es notwendig, dass das Lenkerprofil im Randbereich eine entsprechende Materialstärke aufweist, um einen ausreichenden Lagersitz bereit zu stellen.

Bedingt durch das Strangpressverfahren entspricht die notwendige Stärke des Randbereichs der Wandstärke des Lenkerprofils.

Das Lenkerprofil muss daher entsprechend ausgelegt werden und hat ein entsprechend hohes Gewicht des Lenkers zur Folge.

Die DE 43 00 642 C1 offenbart ein Verbindungselement, welches aus einem durch Stanzen erzeugtem plattenartigen Rohling erzeugt wird, wobei der Rohling Ausnehmungen zur Aufnahme eines Lagers aufweist, welche durch Kaltfließpressen umgeformt werden.

Dazu muss der Rohling vollständig in ein Werkzeug eingelegt werden, wobei eine untermassige Ausnehmung zu einem hülsenförmigen Lagersitz umgeformt wird, wonach das endgültige Bauteil nach dem Kaltfließpressvorgang zur Verfügung steht.

Die Herstellung solcher Lenker ist aufwändig und werkzeugintensiv.

Ferner ist es bekannt, zur Herstellung eines Lenkers hohle Strangpressprofile einzusetzen. Um Lager im Hohlprofil aufzunehmen, sind fluchtende Ausnehmungen in gegenüber liegenden Wänden des Hohlprofils eingestanzt. In diese wird das Lager in einer Lagerhülse eingesetzt.

Stranggepresste Hohlprofile haben den Nachteil, dass eine große Wandstärke des Hohlprofils notwendig ist, um eine ausreichenden Lagersitz zu gewährleisten.

Ein gattungsgemäßes Verfahren zur Herstellung eines Lenkers einer Radaufhängung aus einem Aluminium-Werkstoff ist in der DE 10 2010 051 884 A1 offenbart.

Es ist Aufgabe der Erfindung ein Verfahren zur Herstellung eines Lenkers aus einem Profil zur Verfügung zu stellen, der bei möglichst geringem Gewicht einen möglichst breiten Lagersitz bereitstellt, und hochpräzise zu fertigen und auf einfache Weise herzustellen ist.

Die Aufgabe wird durch die kennzeichnenden Merkmale des Patentanspruchs 1 in Verbindung mit seinen Oberbegriffsmerkmalen gelöst.

Die Unteransprüche stellen vorteilhafte Weiterbildungen der Erfindung dar.

In bekannter Weise umfasst der zufertigende Lenker ein aus einer Aluminiumlegierung durch Strangpressen hergestelltes Profil, ein Lenkerprofil, mit wenigstens zwei gegenüberliegenden Profilwänden. Ferner weist ein Lenker eine Lageraufnahme auf, die aus wenigstens zwei fluchtenden Ausnehmungen, welche in die gegenüberliegenden Wände eingebracht sind, gebildet werden. Die Ausnehmungen weisen naturgemäß einen Randbereich auf.

Dabei weist der Randbereich je Ausnehmung einen gegenüber der Materialstärke verbreiterten, Lageraufnahmebund auf.

Durch den verbreiterten Lagerbund ist eine breite Auflagefläche zur Aufnahme der Lagerkräfte bereitgestellt. Entsprechend kann dadurch die Stärke der Profilwand des Lenkerprofils gegenüber dem Stand der Technik reduziert werden.

Als Profile eigenen sich insbesondere Hohlprofile oder Profile oder offene Profile, wie beispielsweise U-Profile.

Der Lageraufnahmebund kann eine axiale Ausdehnung von wenigstens 1,5 x Wandstärke aufweisen.

Der Lenker kann ein Schlitzlager umfassen, welches in die Lageraufnahme eingebracht ist. Ein Schlitzlager spannt ein Elastomerlager mit einer einen Schlitz aufweisenden Lageraußenhülse durch Eintreiben des Lagers in die Lageraufnahme vor.

Für die Aufnahme eines Schlitzlagers ist die Passgenauigkeit des Lagerbundes von enormer Bedeutung.
Durch den breiten Traganteil des Lagerbunds wird ein Ausbeulen der Lageraußenhülse, bedingt durch die Druckvorspannung und den nicht geschlossenen Außenring, verhindert.

Die Verwendung eines Schlitzlagers erhöht die Lebensdauer des Gummilagers signifikant.

Gemäß dem erfindungsgemäßen Verfahren zur Herstellung des zuvor beschriebenen Lenkers wird zuerst ein hohles Strangpressprofil, ein Lenkerprofil, erzeugt.

In das Lenkerprofil werden in zwei gegenüberliegende Wände zwei Ausnehmungen eingebracht, insbesondere gestanzt.

Diese Ausnehmungen sind fluchtend eingebracht und untermassig gefertigt.

Erfindungsgemäß wird der Randbereich der Ausnehmung durch Rollieren in den Lagerbund umgeformt.

Beim Rollieren wird ein rotierender Körper, eine Rolle, gegen den Randbereich der untermassigen Ausnehmung gedrückt. Dadurch wird Material so verdrängt, dass ein Lageraufnahmebund beidseitig in Lagerachsrichtung entsteht.

Auf diese Weise kann ohne erhöhte Wärmeeinbringung in das Bauteil auf einfache Weise eine hochpräzise Umformung des Randbereichs in einen Lagerbund erreicht werden.

Das Lenkerprofil kann durch Biegeoperationen an die Einbausituation angepasst werden, wobei die Biegeoperationen vor dem Einbringen der Ausnehmungen erfolgen sollen.

Vorzugsweise erfolgt das Rollieren durch ein rotierendes balliges Werkzeug, welches orthogonal zur Lagerachse an den Randbereich der Ausnehmung herangeführt wird und diesen aufweitet.

Die Aufweitung kann auch durch ein rotierendes zylinderförmiges Werkzeug erfolgen.

Besonders vorteilhaft ist die Kombination aus einem ersten Arbeitsschritt, bei dem zuerst ein Rollieren mit dem balligen Werkzeug erfolgt und im Anschluss eine Begradigung des entstandenen Lagerbundes mittels eines zylinderförmigen Werkzeugs erfolgt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine perspektivische Ansicht eines Lenkerprofils nach dem Stand der Technik,
- Fig. 2: eine schematische Schnittansicht eines Lenkerprofils aus einem Hohlprofil mit Ausnehmung,
- Fig. 3: eine schematische Detailschnittansicht eines Randbereichs einer Ausnehmung während des Umformvorgangs,
- Fig. 4: eine schematische Detailschnittansicht eines Randbereichs einer Ausnehmung während des Umformvorgangs,
- Fig. 5: und eine schematische Schnittansicht nach erfolgtem Umformvorgang.

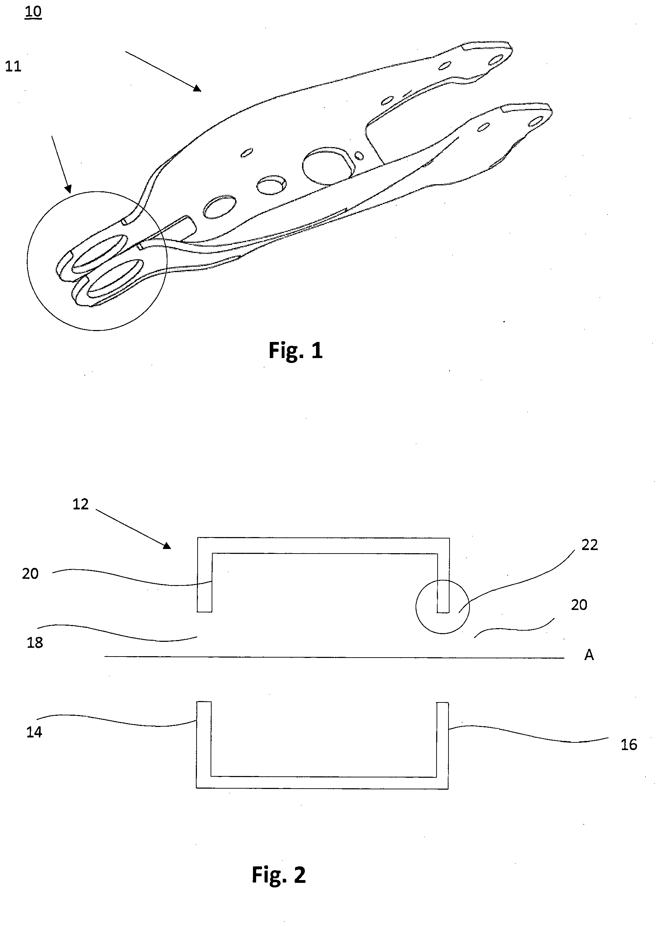

Fig. 1 zeigt die perspektivische Ansicht eines durch Strangpressverfahren hergestellten Lenkerprofils 10 nach dem Stand der Technik. Das als U-Profil hergestellte Strangpressteil wurde durch nachträgliches Umformen und Ausstanzen in die Lenkerform gebracht. Dabei wurde in einem Arbeitsschritt die Lageraufnahme 11, die durch zwei gegenüberliegende Ausnehmungen in den gegenüberliegeden Profilwänden gebildet wird, in das Strangpressteil eingebracht.

Fig. 2 zeigt einen Schnitt durch ein Strangpressprofil 12 eines Lenkers 10. In das Hohlprofil rechteckigen Querschnitts sind in die Seitenwände 14, 16 Ausnehmungen 18, 20 zur Lageraufnahme eingestanzt. Die Ausnehmungen 18, 20 sind kreisförmig und fluchtend um die Lagerachse A ausgebildet.

Koaxial zur Lagerachse kann nach Abschluss des Fertigungsvorgangs ein Lager eingesetzt werden.

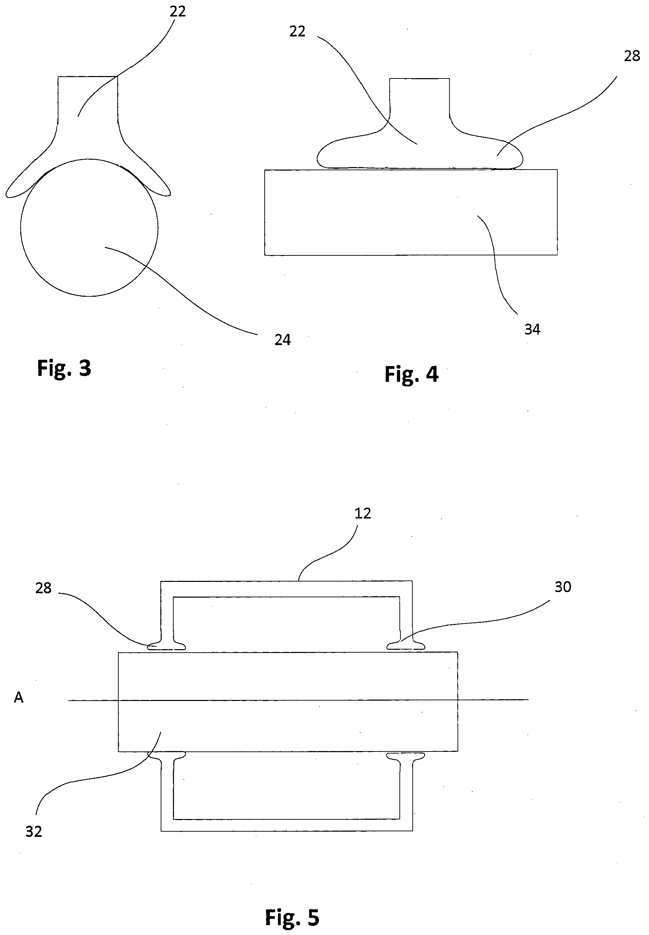

Der Durchmesser der Ausnehmungen 18, 20 ist untermassig, wodurch der zur Aufnahme des Lagers notwendige Ausnehmungsdurchmesser erst durch die Umformung des Randbereichs 22, wie in den folgenden Fig. 3 und 4 beschrieben, erreicht wird.

Die Fig. 3 und 4 zeigen in einer Detailschnittansicht die schrittweise Umformung des Randbereichs 22 der Ausnehmung 20 des innerhalb des gestrichelten Kreises dargestellten Bereichs.

Der Randbereich 22 wird erst durch eine rotierende ballige Rolle 24, die in einer Richtung orthogonal zur Lagerachse gegen die Seitenwand des Lenkprofils bewegt wird, vorausgeformt. Durch die ballige Kontur der Rolle 24 wird das Material nach außen gedrängt und bildet einen Lageraufnahmebund 28 mit einer Erhebung in Richtung der Lagerachse A.

Fig. 4 zeigt eine schematische Ansicht während des Umformvorgangs, wobei der bereits durch die ballige Rolle vorgeformte Lagerbund durch eine zylinderförmige Rolle ebenfalls mit einer Bewegung, die orthogonal zur Lagerachse A verläuft gegen den Randbereich 22 der Ausnehmung 20, verfahren wird. Der vorgeformte Lagerbund 28 wird durch die zylindrische Rolle 34 begradigt und verleiht dem Lagerbund 28 seine endgültige passgenaue Kontur. Durch den breiteren Lagerbund 28 können nun Lagerkräfte des aufzunehmenden Lagers 32, insbesondere eines Schlitzlagers, aufgenommen werden, ohne dass eine Erhöhung der Wandstärke des Lenkerprofils 12 notwendig wäre.

Fig. 5 zeigt die schematische Schnittansicht des fertig bearbeiteten Lenkerprofils 12, wobei die Randbereiche 22 und 26 der Ausnehmungen 18 und 20 durch Rollieren, wie in den zu vorangehenden Fig. 3 und 4 beschrieben, je einen Lagerbund 28, 30 umgeformt werden. Dieser Lagerbund 28, 30 stellt nun einen breiten Lagersitz für die Aufnahme der Lageraußenhülse 32 eines Gummilagers zur Verfügung, welches durch einen Presssitz in dem Lenkerprofil 12 gehalten wird.

## Patentansprüche

1. Verfahren zur Herstellung eines Lenkers (10) einer Radaufhängung aus einem Aluminium-Werkstoff, wobei der Lenker (10) als Profil (12) im Strangpressverfahren hergestellt ist, welches zwei gegenüberliegende Profilwände aufweist und der Lenker (10) mindestens eine Lageraufnahme (11) zur Aufnahme eines Lagers (32) aufweist, wobei die Lageraufnahme (11) durch zwei fluchtende Ausnehmungen (18, 20) in gegenüberliegenden Profilwänden gebildet ist und die Ausnehmungen (18, 20) einen Randbereich (22, 26) aufweisen, wobei der Randbereich (22, 26) der Ausnehmung (18, 20) einen Lageraufnahmebund (28, 30) bildet, der in Richtung der Lagerachse (A) breiter ist als die Wandstärke der Profilwände, **dadurch gekennzeichnet, dass** der Randbereich (22, 26) der Ausnehmungen (18, 20) durch Rollieren verbreitert wird.

2. Verfahren nach Anspruch 1, **dadurch gekennzeichnet, dass** der Randbereich (22, 26) mit einem balligen Werkzeug, welches orthogonal zur Lagerachse vom Ausnehmungsinneren gegen den Randbereich geführt wird.

3. Verfahren nach Anspruch 1 oder 2, **dadurch gekennzeichnet, dass** der Randbereich (22, 26) mit einem zylinderförmigen Werkzeug, welches orthogonal zur Lagerachse vom Ausnehmungsinneren gegen den Randbereich geführt wird.

## Claims

1. Method for producing a control arm (10) of a wheel suspension made of an aluminium material, wherein the control arm (10) is produced as a profile (12) in an extrusion process that has two opposite profile walls and the control arm (10) at least one bearing retainer (11) for receiving a bearing (32), wherein the bearing retainer (11) is formed by two aligned recesses (18, 20) in opposite profile walls and the recesses (18, 20) have an edge region (22, 26), wherein the edge region (22, 26) of the recess (18, 20) forms a bearing retainer collar (28, 30) that is wider in the direction of the bearing axis (A) than the wall thickness of the profile walls, **characterised in that** the edge region (22, 26) of the recesses (18, 20) is widened by rolling.

2. Method according to claim 1,
**characterised in that**
the edge region (22, 26) with a spherical tool that is guided orthogonally to the bearing axis of the recess interior against the edge region.

3. Method according to claim 1 or 2,
**characterised in that**
the edge region (22, 26) with a cylindrical tool that is guided orthogonally to the bearing axis of the recess interior against the edge region.

## Revendications

1. Procédé de fabrication d'un bras (10) d'une suspension de roue en un matériau à base d'aluminium,
dans lequel le bras (10) est fabriqué comme un profilé (12) dans un procédé de filage, lequel profilé comporte deux parois de profilé opposées, et le bras (10) comporte au moins un logement de palier (11) destiné à loger un palier (32),
dans lequel le logement de palier (11) est formé par deux évidements alignés (18, 20) dans des parois de profilé opposées et les évidements (18, 20) comportent une zone de bord (22, 26),
dans lequel la zone de bord (22, 26) de l'évidement (18, 20) forme un collet de logement de palier (28, 30) qui est plus large dans la direction de l'axe de palier (A) que l'épaisseur de paroi des parois de profilé,
**caractérisé en ce que** la zone de bord (22, 26) des évidements (18, 20) est élargie par écrouissage aux rouleaux.

2. Procédé selon la revendication 1, **caractérisé en ce que** la zone de bord (22, 26) avec un outil bombé, qui est guidé, perpendiculairement à l'axe de palier, de l'intérieur d'évidement contre la zone de bord.

3. Procédé selon la revendication 1 ou 2, **caractérisé en ce que** la zone de bord (22, 26) avec un outil cylindrique, qui est guidé, perpendiculairement à l'axe de palier, de l'intérieur d'évidement contre la zone de bord.
